# EUROPEAN PATENT SPECIFICATION

(11) **EP 1 188 215 B1**
(45) Date of publication and mention of the grant of the patent: **27.08.2008**
(21) Application number: 00977619.6
(22) Date of filing: 14.11.2000
(51) Int. Cl.: H02K 7/10, B65G 23/08

(54) **CONSTRUCTION AND METHOD IN ELECTRIC MOTOR DRIVE**
ANTRIEBSANORDNUNG UND-VERFAHREN MIT ELEKTROMOTOR
ASSEMBLAGE ET PROCEDE D'ENTRAINEMENT PAR MOTEUR ELECTRIQUE

(30) Priority: 16.11.1999 FI 992456
(43) Date of publication of application: 20.03.2002
(73) Proprietor: Voith Patent GmbH, 89522 Heidenheim (DE)
(72) Inventor: SOITU, Viktor, FIN-53810 Lappeenranta (FI)
(74) Representative: Herzog, Markus
(86) International application number: PCT/FI2000/000990
(87) International publication number: WO 2001/037398

(56) References cited:
- DE-U- 29 717 062
- US-A- 4 771 197
- US-A- 5 918 728

## Description

The object of this invention is the construction in electric motor drive, where an asynchronous motor, such as drum motor or similar motor, which has a stator mounted on a non-rotatory shaft and around the stator is a rotor, which is rotatory, like by means of bearings, connected on the same shaft and has a short-circuit arrangement, is arranged to drive a machine construction (actuator).

Above described types of asynchronous, compact drum motors have been presented for example in publications EP 0 582 563, US 4,868,436 and FI 811414. Among these, the first-mentioned solution is carried into effect by keeping separate and individual copper short-circuit bars in their position by pressing them in place with collars mounted on the end flanges of the motor.

The disadvantage of this type of solution is the poor heat transmission from the short-circuit bars to the rotor shell. Further in the solution of US-patent 4,868,436 the rotor structure is built up of so called active part i.e. electric plate package and at least two separate rotor shell parts i.e. support flange and onto it by means of screw coupling connected rotor shell, which makes the solution in question unnecessarily complicated. In application publication EP 0 617 155 there is a much similar solution (of above mentioned U.S.-patent), where motor's rotor package, which is constructed/laminated of electric plates, is connected together with it's short-circuiting conductors to drum roller by means of screw/press coupling, which operates as a roll surface. Also this solution is disadvantageous especially in manufacturing. Further in latter Finnish patent application is presented a drum motor, which is designed especially for elevator purposes. In this solution a separate roller with cable grooves and brake surface area for elevator's lifting cables and brakes is mounted on the upper shell of the rotor. E.g. in this solution is additionally proposed that the motor cooling is taken care of by machining radial ventilation holes in the roller and stator and to blow the cooling air to the holes with a separate blower.

To all of the above mentioned solutions it is common, that first of all respectively used machine construction (actuator)'s connection to the drum motor requires special mounting arrangements and/or extra parts for it i.e. a separate drive roll to be assembled on to an electrical motor's rotor (EP 0 582 563), a firmly assembled flange arrangement on the motor's frame (US 4,868,436) or a shell to be assembled coaxially outside the drum motor, such as to surround the drum motor and a short-circuit arrangement provided therein (FI 811414 and EP 0 617 155 A1). On the other hand in the motor constructions in the above mentioned innovations the cooling circulation is carried out by traditional means, thus it is not possible to reach higher outputs than with standard drum motor solutions.

The present invention in particular relates to a machine construction according to the preamble part of claim 1 and to a method according to the preamble part of claim 12. Such a generic machine construction and method is disclosed in US-A-4,771,197, wherein the conventional machine construction comprises an outer cylinder to which a rotor stack is attached such as to be disposed co-axially inside the outer cylinder The outer cylinder is the functional part of an elevator motor having rope grooves formed in the outer surface of the cylinder to receive a rope of the elevator.

In view of the above-described circumstances, it is an object of the present invention to provide a machine construction and a method for manufacturing the same, wherein the machine construction has an electric asynchronous motor of increased simplicity of construction, manufacturing and usage, which can achieve higher output power/torque, and which can overcome the above-described disadvantages of the prior art to essentially improve the level of technique in this area. According to the present invention, this object is achieved by a machine construction according to claim 1.

It is principally distinctive to the construction according to this invention, to carry out this purpose, that the functional part of the machine construction (actuator), like conveyor's driving roll or similar, is arranged to operate by having short-circuit arrangement as the rotor of the asynchronous motor. In other words: the "actuator" (e.g. driving roll) is formed to constitute itself the rotor of the asynchronous motor, with the actuator comprising the short-circuit arrangement.

It should be noted that the term "actuator comprising the short-circuit arrangement" is referring to many various (or different) embodiments. In the most simple embodiment, the actuator is formed as a one-piece solid roll shell being free from short-circuit bars and rings (also being free from laminated elements).

In another embodiment (also being free from laminated elements) short-circuit bars and rings are provided. Each of the bars and the rings will be located within the roll shell, preferably with a tighc or positive fit (or locking) being provided between each bar and the roll shell, whereby additional mounting elements (e.g. collars and/or screws) are no more needed.

The most important advantages of the construction of this invention is the simplicity of its construction, manufacturing and usage, efficiency and reliability of working, which attain the most possible integrated and compact machine configuration, which allow to get higher output and higher torque from the used asynchronous massive rotor and significantly to improve its performance in other ways too. The simplicity of the construction of this invention as advantageous solution is based e.g. on fact there is no need to use traditional short-circuiting conductors, as the short-circuit arrangement is established directly into the functional part of the machine construction (actuator), like conveyor's driving roll. On the other hand the structure of this invention makes it possible to use the traditional short-circuiting connectors in a new way, so that they are located essentially internally on a functional part of the machine construction (actuator) as the rotor shell, like conveyor's driving roll. When applying advantageously the structure of this invention, the asynchronous motor is equipped with primary and secondary cooling circulation to cool both the stator and the rotor for example so that the cooling fluid is firstly essentially carried through the stator shaft and with the help of the holes in the shaft elsewhere as parallel flow through the flow system in the rotor shell. As a further improvement the rotor is manufactured of electric conductive compound metal structure, where copper short-circuit bars or pipes and rings are for example explosion welded into pre-drilled/machined holes/slots. On the other hand during manufacturing of the asynchronous motor it is possible to utilize also a casting technique.

Further advantageous solution is to assemble the stator on the hollow shaft/pipe also working as stator shaft, which is used for example to feed over-pressure cooling air. Herewith it is effectuated a hermetic primary cooling, which is known from EP 0 617 155 and which prevents dirt to penetrate into the drum motor, which is not possible to prevent with the conventional effectuated freely (open) breathing air-cooled solutions. Further advantageous feature is that the short-circuit hollow bars or pipes are positioned within the rotor shell, functioning as secondary cooling channels. Thereby it is possible to carry the cooling air to the hottest spots of the rotor, which helps in its way significantly both to obtain the maximum output and to increase the amount of starts/stops of the machine construction (actuator) equipped with the motor in question.

The aforementioned object of the invention is also achieved by a method according to claim 12.

One of the most important advantages the method of this invention has, is the simplicity of the operating principle and the simple constructions which makes it possible and the reliability of working and which allows to gain the utmost compact machine construction (actuator) unit with integrally united asynchronous motor to achieve high mechanical load capacity, vibration strength and high starting and operation torque features. The simplicity of the method of this invention as a advantageous solution is based for example on the fact that there is no need to use a separate laminated rotor component with traditional short-circuiting conductors inside a functional part of the machine construction, by establishing a short-circuit arrangement directly into the functional part of the machine construction (actuator), like conveyor's driving roll. On the other hand the method of this invention makes it possible to use the traditional short-circuiting connectors in a new way, so that they are located essentially internally on a functional part of the machine construction (actuator) as the rotor shell, like conveyor's driving roll.

Furthermore as an advantageous development of this innovation, it is possible to increase an air gap diameter between stator and rotor once a maximum outer diameter and total length of a drum motor is limited. Thus by this innovative design it is possible to get higher output power and higher torque compared to an asynchronous drum motor having same main dimensions as this new innovative drum motor construction and having a standard laminated rotor component inside a rotor shell.

Furthermore as an advantageous development of this method is to minimize the manufacturing costs of the here mentioned massive motor for example by manufacturing the rotor and the associated slots by casting them of steel.

Applying the method advantageously the asynchronous motor is being cooled effectively to get higher output than with conventional ones can be reached, because correctly carried out i.e. according to this invention realized for example hermetic and essentially in axial direction trough the asynchronous motor carried cooling fluid flow makes it possible for example to direct the over-press cooling air to the hottest spots of the rotor, which is an essential condition both to increase the maximum output and to increase the amount of starts/stops. On the other hand compared to the freely breathing air-cooled solutions this solution prevents especially in hard conditions filth to penetrate into the drum motor structure.

Cooling of asynchronous motor with a solid rotor can be realised either with or without a secondary cooling arrangement via hollow bars or tubes inside a functional part of the machine construction (actuator) as the rotor shell. In such constructions the cooling is taken care of only with a primary cooling arrangement (e.g. air flow arrangement though an air gap between an inner surface of rotor shell and an outer surface of stator component.

Furthermore it is important that the short-circuit bars and rings belonging advantageously to the short-circuiting adjustment are arranged essentially integral with rotor shell i.e. at least partly or then totally with internal arrangements, and thus also a much more efficient heat conduction than present, between the steel shell and the copper short-circuit bars and rings can accomplished than with the traditional solutions. This also gives better possibilities for higher output and to increase the starts and stops of the asynchronous motor within a certain time interval.

Advantageous solutions of the method of the invention have been presented in separate independent patent claims.

The invention is in more detail presented in the description and the attached drawings.
- Figure 1 presents: a longitudinal cross section of a typical machine construction (actuator) unit, which is accomplished with the method in this invention and
- Figure 2 presents: a cross-profile of spots Fig 2 - Fig. 2. in Figure 1.
- Figures 3a - 3C present: some alternative massive motor constructions of a drum motor.
- Figures 4 and 5 present: a drum motor designed according to the invention and integrated to one end of a vacuum belt conveyor construction, with Fig. 5 being a section along line V - V of Fig. 4.

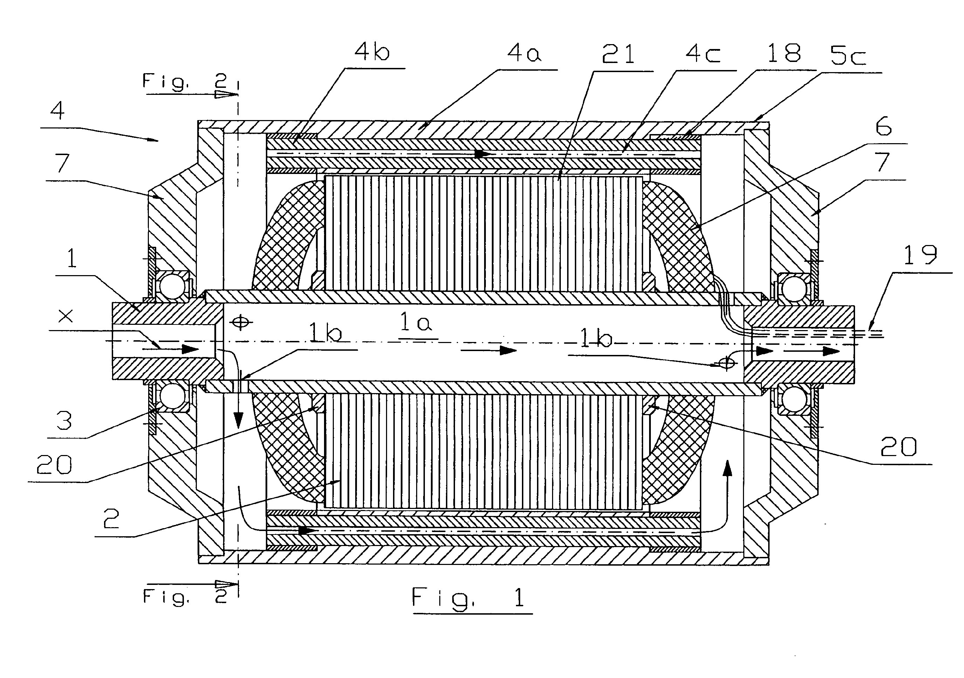

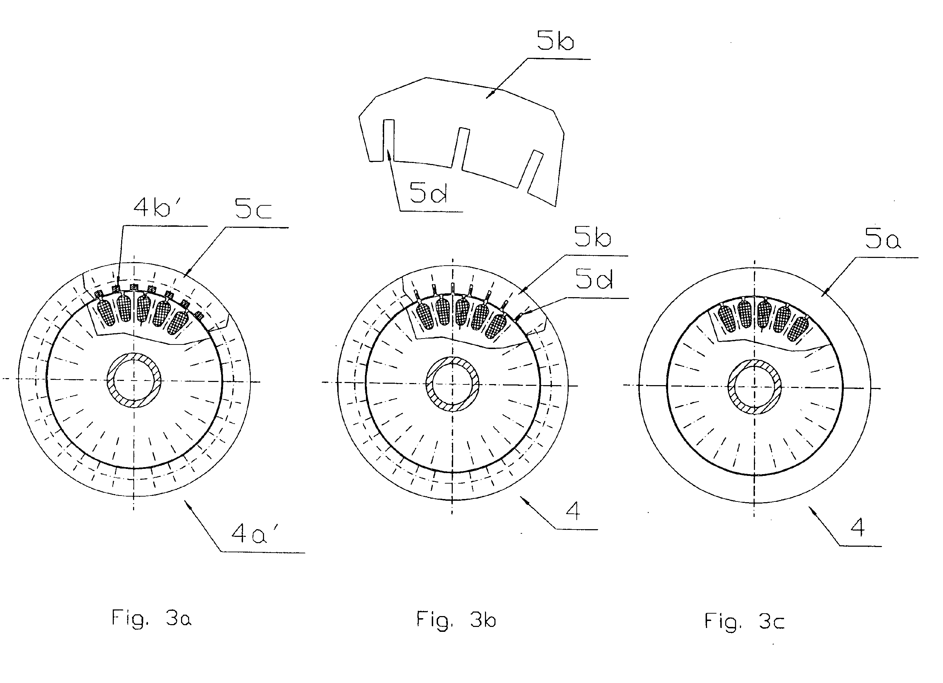

Referring to Figures 1 to 3, the object of this invention is a construction in electric motor drive, where a so called solid asynchronous motor, which has a stator 2 mounted on a non-rotatory shaft 1 and around the stator is a rotor 4, which is, like by means of bearings 3, rotary connected on the same shaft 1 and has a short-circuit arrangement, is designed to drive a machine construction (actuator). The functional part of the machine construction (actuator), like conveyor's 5 driving roll 5a or 5b or 5c is designed to operate by integrally connected short-circuit arrangement as the rotor 4 of the asynchronous motor. Especially in Figure 3c is shown the most simple structure of the invention, in which conveyor's driving roll 5a is realized with a solid shell, which operates directly as the short-circuit arrangement of the rotor 4 without any traditional laminated rotor component with short-circuit conductors (e.g. short-circuit bars and rings). The solution according to this principle is also shown in Figure 3b, where driving roll 5b is designed to operate as the rotor of the asynchronous motor with the solid shell having on its inner surface drilled or machined holes or grooves.

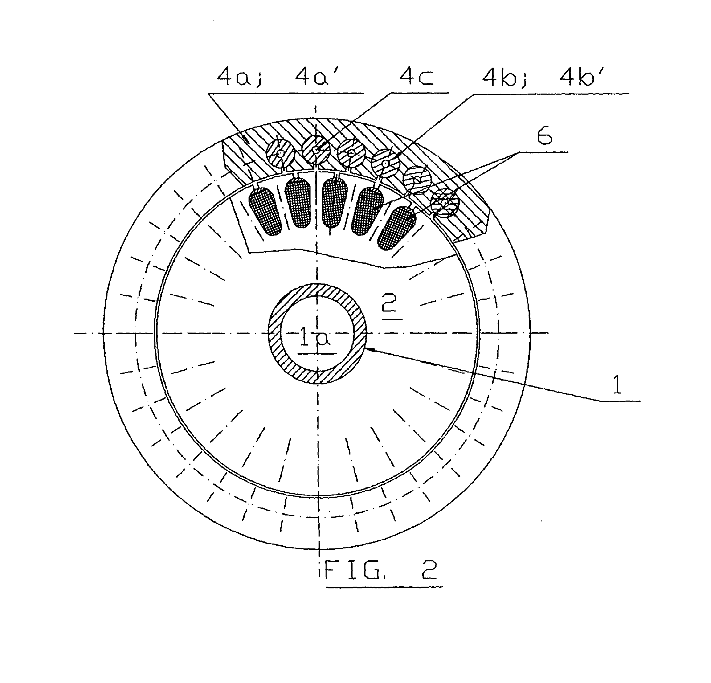

Different from Figures 3b and 3c, the invention may be advantageously used in connection with the structure, where the short-circuit arrangement can be realized in the rotor's shell 4a with short-circuiting conductor bars 4b and rings 8. In this connection short-circuiting connector bars 4b and rings 18 are arranged to operate at least partly internally of the rotor's shell 4a operating as functional part of the machine construction (actuator), such as conveyor's driving roll 5c. This type of solutions are presented especially in Figure 2, where round short-circuit bars 4b are being used and in Figure 3a where quadrangular short-circuit bars 4b' are being used in rotor shell 4a'. The bars 4b shown in Figure 2 may be hollow, so that each bar comprises a channel 4c for piping cooling fluid. At each end of shell 4a, a flange 7 is provided which connects the shell to one of the bearings 3.

In Figure 3a is shown a design, where conveyor's driving roll 5a is realised by a solid shell having quadrangular short-circuit bars on its inner surface. This type of electrical motor design should be used when a compact drum motor constructions (e.g. maximum outer diameter and total length of the drum motor are limited) with high output power and torque are desired. Such a compact drum motor is needed in vacuum belt conveyors used for "tail threading" in paper machines.

A typical design of drum motor's stator component 2 consists typically a pile of 0,3 - 1,0 mm thick electrical sheets 21 which are mounted on a stationary hollow shaft 1 and fixed at their position by spot welding stator end plates 20 to the stationary shaft. Stator windings 6 are connected via electrical connection cable 19 to an external electric grid.

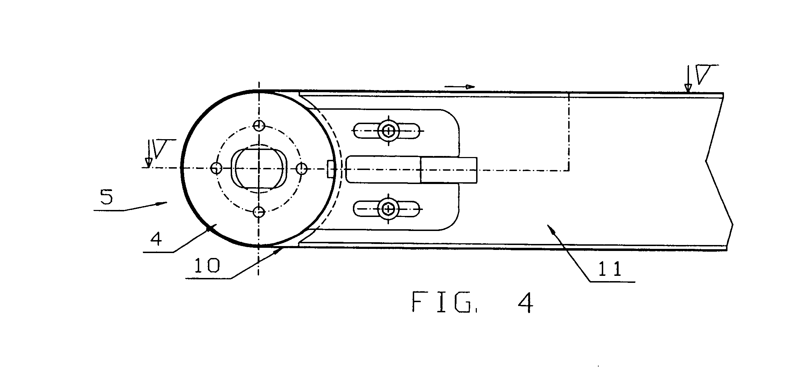

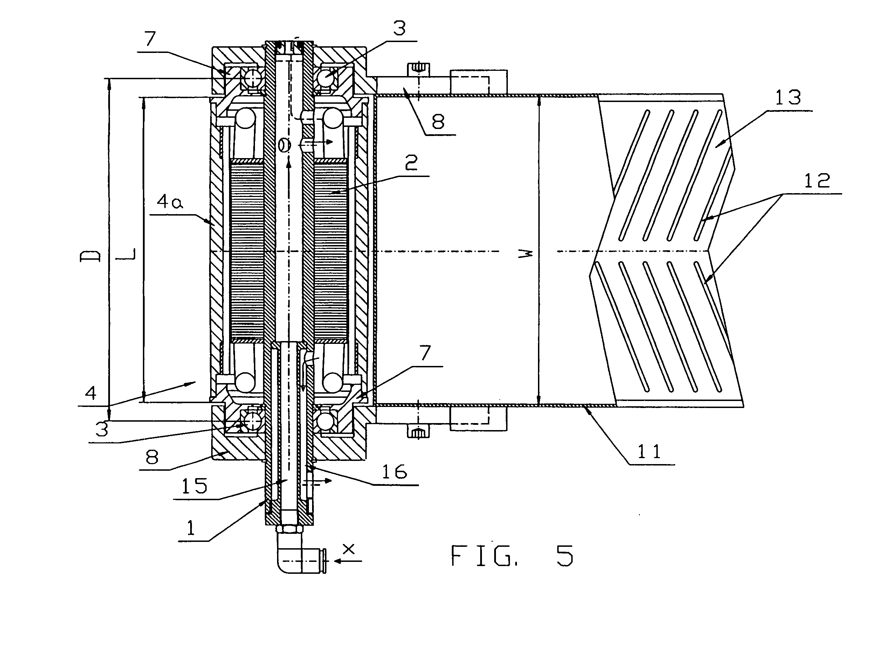

Figures 4 and 5 show one end of a vacuum belt conveyor comprising an endless air pervious belt 10 which - in operation - travels across two rotary pulleys, only one pulley 4 being shown. The pulleys are supported by a vacuum box 11. Therein a negative pressure will be created by any vacuum source (not shown). The negative pressure will propagate through openings 12 of a cover plate 13 and through belt 10 in order to convey a web of paper or similar material, in particular a lead strip or "tail" which has been separated from threading purposes (see e.g. US patent 3,355,349).

In order to drive the belt 10, a pulley 4 is designed as the rotor of an electric motor drive according to the present invention. Similar to Figure 1, a stationary hollow shaft 1 supports a stator 2 and (by means of bearings 3) the rotor 4, - which is the pulley of the vacuum belt conveyor - and which again comprises a rotor shell 4a and two end-flanges 7.

Preferably, the following measures may be provided in order to adapt the electric motor drive to the demands of a vacuum belt conveyor:

The width W of conveyor 5 (and also the length L of the pulley's shell 4a should be relatively small, about 0,25 m. The pulley's diameter should preferably be less than 0,15 m. On the other hand, the speed of the belt should be about the same as the operating speed of modern paper machines which may exceed 2000 m/min. Therefore, there is a need for very high motor output while the dimensions of the motor drive should be relatively small.

To fulfil these demands, the distance D between the bearings 3 is larger than the length L of the pulley's shell 4a, in order to increase the internal space being available for stator 2 and for the short-circuit arrangement of the rotor 4. As a consequence, each flange 7 is formed as a bushing which bridges the difference between length L and distance D. Furthermore, each of the supporting brackets 8 which connect the stationary shaft 1 to the side walls of the vacuum box 11 is formed similar to a Z (in other words: it is "double folded"). In addition, each support bracket 8 may be wrapped around the periphery of one of the flanges 7.

In order to improve the cooling effect, the hollow shaft 1 comprises at one of its ends an internal (e.g. coaxial) supply channel (15) as well as a discharge channel 16, as a result, all the cooling fluid X must pass the inner side of stator 2 as well as its outer side and the inner side of the rotor (plus the channels 4c, if existing, in the bars 4b in Figure 1).

Also, the following is advantageous: The above mentioned supporting brackets 8 can be used also as a connection surface for vacuum belt conveyor's accessories (e.g. knife plates, rotary rippers and choppers) (which is not shown as practical solution in enclosed drawings).

In addition to the things mentioned above, the cooling of the machine construction (actuator) operating as a rotor of a asynchronous motor is realized advantageously mainly with primary cooling by carrying over-press cooling air X in axial direction through the stator shaft 1, which can be for example a hollow shaft, pipe or similar and it is equipped with it's first flow arrangement 1a. On the other hand when using advantageously the structure of this invention it is possible to boost the cooling of the asynchronous motor besides what was described earlier or instead of it also with secondary cooling by equipping the short-circuiting bars 4b' with another flow arrangement 4c. Then, for example, it is possible to carry cooling air X in axial direction through the hollow copper short-circuit bars 4b, for example, according to the principle in Figure 1 with the help of the holes 1b in the stator shaft 1 together with the primary air flow 1a which take place together with the parallel flow to the hottest sports of the rotor, which helps to get higher output from the machine construction (actuator) and especially to improve to carry the short run starts/stops.

Once an asynchronous motor has a solid rotor's cross section as shown in Figures 3a, 3b and 3c, cooling is taken care of an air flow arrangement through an air gap which locates between an inner surface of a rotor shell 5a, 5b, 5c and an outer surface of stator component 2.

Further advantageous solution of the structure of the invention is to manufacture the rotor of electric conductive compound metal structure, where copper short-circuit bars 4b; 4b' are integrally connected to the steel rotor shell 4a; 4a' for example by explosion welding or by centrifugal casting.

It is possible with the asynchronous motor realized according to the invention when using especially star type coupling for windings, to get the output of the drum motor equipped with three, four, or six pole stator windings always reach the level 0,5 - 500 kW and to have the speed of rotation typically in the area of 0 - 20000 rpm.

As a further advantageous development (which is not shown in enclosed drawings) it is advantageous to benefit the frequency transformer used by the asynchronous motor, which is equipped with active rotation speed control. In this connection rather traditional solutions can be used to achieve the wanted effect.

The object of this invention is also a method with an electric motor drive, where the machine construction (actuator) is used by a asynchronous motor, such as drum motor, which has a stator 2 mounted on a non-rotatory shaft 1 and around the stator is a rotor 4, which is rotatory, like by means of bearings 3, connected on the same shaft 1 and has a short-circuit arrangement. The functional part of the machine construction (actuator), like conveyor's 5 driving roll 5a, is arranged to operate by having short-circuit arrangement as the rotor 4 of the asynchronous motor (typical constructions shown in Figures 2 and 3a). The method according to this principle is applied in simplest way for example in constructions in Figure 3b, wherein driving roll's 5b machined grooves/slots 5d are arranged as the short-circuit arrangement. On the other hand in Figure 3c is a similar type of solution without traditional short-circuit bars, wherein the driving roll 5a is realized a solid shell, which operates directly as the short-circuiting arrangement.

Furthermore as an advantageous application of this method it is advantageous to benefit it with asynchronous motor, whose short-circuit arrangement is connected to the rotor 4, like short circuiting bars 4b and rings 8 are supported on rotor's shell 4a. In this connection short-circuit bars and rings belonging to the short-circuit arrangement are arranged to operate at least partly internally as the rotor's 4 shell 4a of the operating functional part of the machine construction (actuator), such as conveyor's driving roll 5a. In this connection this type of solution is presented, especially in Figure 2, showing round short-circuit conductors 4b and further in Figure 3a showing quadrangular short-circuit bars 4b'.

Furthermore referring to Figure 1 this method can be used with an asynchronous motor which is arranged to be cooled by having a fluid flow. The cooling of the asynchronous motor is realized as a closed system by carrying cooling fluid, such as over-press cooling air X, hermetically essentially in axial direction in a primary flow arrangement 1a through the stator shaft 1 like hollow shaft, pipe or similar. On the other hand the cooling of the asynchronous motor can be arranged instead of as described above by carrying cooling fluid, such as over-press cooling air X hermetically essentially in axial direction in a secondary flow arrangement 4c provided in short-circuit conductors 4b like hollow bars or pipes.

Especially referring to Figure 1, as an example: Rotor 4 of the solid asynchronous motor is manufactured of electric conductive compound metal structure, when advantageously, for example, copper short circuit bars 4b which are welded, like explosive welded or butt welded into the holes in the steel rotor shell 4a or that they are cast integral with a most suitable casting method, like press casting method (solution is not presented in Figure 1). With above mentioned methods every short-circuit bar 4b and ring 18 is integrated as an integral part of rotor shell 4a, which allows to achieve better heat transmission between the steel shell and copper short-circuit conductors. This fact has a great importance when trying to get higher maximum power from the machine constructions (actuators) than with traditional solutions and especially when short run starts/stops are in question. The same is true with the embodiment shown in Figure 3a comprising rotor shell 4a' and bar 4b'.

It is obvious that this invention is not limited to the above mentioned or explained solutions, it can be considerably modified within it's basic idea. Thereby it is possible firstly to utilize the construction or arrangement of this invention in most different connections, whereupon the dimensions and constructions can considerably differ from the hereby presented example drawings. On the other hand other type of fluids can be used in the cooling of the asynchronous motor realized according to the invention or the cooling can be done differently from what presented above.

## Claims

1. Machine construction comprising a functional part (4, 5) and an electric asynchronous motor for rotatably driving said functional part (4, 5),
wherein said motor includes a stator (2) mounted on a non-rotatable shaft (1) and rotor (4, 5) having a short-circuit arrangement (4b; 4b'; 5d) and being rotatably connected to said shaft (1), and
wherein said rotor (4) is designed to drive said machine construction,
**characterized in that**
the functional part of the machine construction comprises a one-piece roll shell, wherein said short-circuit arrangement (4b; 4b'; 5d) is established or integrated in the roll shell to form an integral part of the roll shell wall, such that the functional part (4, 5) itself constitutes the rotor (4, 5) of the motor.

2. Machine construction as claimed in claim 1, wherein the short-circuit arrangement is established by the short circuiting bars (4b, 4b') and rings (18) supported on the rotor's shell (4a,4a'), **characterized in that** the short-circuiting bars (4b, 4b') and rings (18) belonging to the short-circuit arrangement are arranged integral with the rotor's (4) shell (4a, 4a'), which is a functional part of the machine construction (actuator), like conveyor's driving roll (5).

3. Machine construction as claimed in claim 1 or claim 2, wherein an asynchronous motor is arranged to be cooled by having a fluid flow, **characterized in that** the cooling of the asynchronous motor is realized in a closed system, by carrying cooling fluid, such as over-press cooling air (x) hermetically essentially in axial direction with it's primary flow arrangement (1a) through the stator shaft (1) like hollow shaft or pipe and/or with secondary flow arrangement (4c) through short-circuit conductors (4b) like hollow bars or pipes.

4. Machine construction as claimed in any of the claims 1-3, **characterized in that** the rotor (4) of the solid asynchronous motor comprises an of electric conductive compound metal manufactured structure, preferably comprising copper short circuit conductors (4b, 4b'), which are welded by explosive welding, butt welding into the holes in the steel rotor shell (4a, 4a') or that they are cast integral with the rotor shell in their places by a suitable casting method (e.g. centrifugal casting method).

5. Machine construction as claimed in any of the claims 1-4, **characterized in that that** when using especially star type coupling for windings, the output of the asynchronous motor equipped with three, four, or six pole stator windings is 0,5 - 500 kW having speed of rotation 0-20 000 rpm.

6. Machine construction as claimed in some of the claims 1-5, **characterized in that** the asynchronous motor is having a frequency transformer drive, which is equipped with an active rotation speed control.

7. Machine construction as claimed in some of the claims 1-5, **characterized in that** the rotor is formed as a shell of a pulley (4) which is part of a vacuum belt conveyor (5) comprising a stationary vacuum box (11), the rotor drive further comprising: said central shaft (1) being supported by at least one supporting bracket (8) which is connected to the vacuum box (11).

8. Machine construction as claimed in some of the claims 1-7, **characterized in that** the drum motor's supporting brackets (8) can be used also as a connection surface(s) of the vacuum belt conveyor's accessories (e.g. knife plates, rotary rippers and choppers).

9. Machine construction as claimed in claim 7, **characterized in that** the distance D between the bearings (3) supporting the pulley (4) is larger than the length L of the pulley's shell (4a).

10. Machine construction as claimed in claim 9, wherein each flange (7) which connects an end of shell (4a, 4a') to one of the bearings (3) is formed as a bushing which bridges the distance between length L and D.

11. Machine construction as claimed in claim 9, wherein each supporting bracket (8) is formed'double-folded similar to a Z.

12. Method for manufacturing a machine construction having an electric asynchronous motor for rotatably driving a functional part (4, 5) of said machine construction,
wherein said motor includes a stator (2) mounted on a non-rotatable shaft (1) and a rotor (4, 5) having a short-circuit arrangement (4b; 4b'; 5d) and being rotatably connected to said shaft (1), and
wherein said rotor (4) is designed to drive said machine construction,
**characterized by**
arranging the functional part (4, 5) to constitute itself the rotor (4, 5) of the motor,
wherein the short-circuit arrangement (4b; 4b'; 5d) is established or integrated directly into a one-piece roll shell of the functional part (4, 5) to form an integral part of the roll shell wall.

13. Method as claimed in claim 12 with asynchronous motor, where the short-circuit arrangement is realized in connection with the rotor (4) like having short-circuit conductor bars (4b, 4b') and rings (18) supported on the rotor's shell (4a), **characterized in that** the short-circuit arrangement operates at least partly internally as the rotor's (4) shell (4a, 4a') of the operating functional part of the machine construction (actuator), such as conveyor's driving roll (5a, 5b, 5c).

14. Method as claimed in claim 12 or 13
wherein a asynchronous motor is cooled by having a fluid flow, **characterized in that** the cooling of the asynchronous motor is realized as closed by carrying cooling fluid, such as over-press cooling air (x) hermetically essentially in axial direction with it's primary flow arrangement (1a) through the stator shaft (1) like hollow shaft or pipe and/or through with secondary flow arrangement (4c) equipped short-circuit conductors (4b') like hollow bars or pipes.

15. Method as claimed in some of the claims 12-14, **characterized in that** the rotor (4) of the solid asynchronous motor is manufacture of electric conductive compound metal structure, when upon most suitable are copper short circuit conductors (4b, 4b'), which are connected into the holes and/or grooves by welding, like explosive welding or butt welding in the steel rotor shell (4a, 4a') or that they are cast integral within the rotor by a suitable casting method, like centrifugal casting method.

16. Method as claimed in some of the claims 12-15, **characterized in that** the rotor is formed as a shell of a pulley (4) which is part of a vacuum belt conveyor (5) comprising a stationary vacuum box (11), the rotor drive further comprising: said central shaft (1) being supported by at least one supporting bracket (8) which is connected to the vacuum box (11).

## Patentansprüche

1. Maschinenkonstruktion, umfassend ein funktionelles Teil (4, 5) und einen elektrischen Asynchronmotor für einen Drehantrieb des funktionellen Teils (4, 5), wobei der Motor einen an einer nicht-drehbaren Welle (1) angebrachten Stator (2) und einen eine Kurzschlussanordnung (4b; 4b'; 5d) aufweisenden und mit der Welle (1) drehbar verbundenen Rotor (4, 5) umfasst, und
wobei der Rotor (4) dafür eingerichtet ist, die Maschinenkonstruktion anzutreiben,
**dadurch gekennzeichnet, dass**
das funktionelle Teil der Maschinenkonstruktion einen einstückigen Walzenmantel umfasst, wobei die Kurzschlussanordnung (4b; 4b'; 5d) in dem Walzenmantel ausgebildet oder integriert ist, so dass sie einen integralen Bestandteil der Wand des Walzenmantels bildet, so dass das funktionelle Teil (4, 5) an sich den Rotor (4, 5) des Motors bildet.

2. Maschinenkonstruktion nach Anspruch 1, wobei die Kurzschlussanordnung durch die Kurzschlussstäbe (4b, 4b') und -ringe (18) ausgebildet ist, die am Mantel (4a, 4a') des Rotors gehalten sind,
**dadurch gekennzeichnet, dass** die zur Kurzschlussanordnung gehörenden Kurzschlussstäbe (4b, 4b') und -ringe (18) integral mit dem Mantel (4a, 4a') des Rotors (4) eingerichtet sind, der ein funktionelles Teil der Maschinenkonstruktion (Stellglied) ist, wie etwa eine Antriebswalze (5) einer Transporteinrichtung.

3. Maschinenkonstruktion nach Anspruch 1 oder Anspruch 2, wobei ein Asynchronmotor derart eingerichtet ist, dass er durch eine Fluidströmung gekühlt wird, **dadurch gekennzeichnet, dass** die Kühlung des Asynchronmotors in einem geschlossenen System realisiert ist, indem ein Kühlfluid, wie etwa Kühlluft (x) unter Überdruck, hermetisch im Wesentlichen in axialer Richtung transportiert wird, wobei die Primärströmungsanordnung (1a) des Systems durch die Statorwelle (1), wie etwa eine hohle Welle oder ein Rohr, verläuft oder/und eine Sekundärströmungsanordnung (4c) durch Kurzschlussleiter (4b), wie etwa hohle Stäbe oder Rohre, verläuft.

4. Maschinenkonstruktion nach einem der Ansprüche 1 bis 3, **dadurch gekennzeichnet, dass** der Rotor (4) des festen Asynchronmotors eine aus einem elektrisch leitfähigen Verbundmetall hergestellte Struktur umfasst, welche vorzugsweise Kupfer-Kurzschlussleiter (4b, 4b') umfasst, die geschweißt sind durch Explosionsschweißen, Stumpfschweißen in die Löcher in dem Stahlrotormantel (4a, 4a') oder die integral mit dem Rotormantel an ihren Positionen durch ein geeignetes Gießverfahren (zum Beispiel Zentrifugalgießverfahren) gegossen sind.

5. Maschinenkonstruktion nach einem der Ansprüche 1 bis 4, **dadurch gekennzeichnet, dass** wenn insbesondere eine Kopplung vom Sternschaltungstyp für die Wicklungen verwendet wird, die Ausgabe des mit drei- vier- oder sechspoligen Statorwicklungen ausgestalteten Asynchronmotors 0,5 bis 500 kW mit einer Drehgeschwindigkeit von 0 bis 20 000 Umdrehungen pro Minute beträgt.

6. Maschinenkonstruktion nach einem der Ansprüche 1 bis 5, **dadurch gekennzeichnet, dass** der Asynchronmotor eine Frequenzumwandlungsansteuerung aufweist, welche mit einer aktiven Drehzahlsteuerung/Regelung ausgestattet ist.

7. Maschinenkonstruktion nach einem der Ansprüche 1 bis 6, **dadurch gekennzeichnet, dass** der Rotor als Mantel einer Riemenscheibe (4) ausgebildet ist, welche Teil einer Unterdruck-Riementransporteinrichtung (5) ist, die einen stationären Unterdruckkasten (11) umfasst, wobei der Rotorantrieb ferner umfasst: die zentrale Welle (1), welche durch wenigstens eine Halterungsklammer (8) gehalten ist, die mit dem Unterdruckkasten (11) verbunden ist.

8. Maschinenkonstruktion nach einem der Ansprüche 1 bis 7, **dadurch gekennzeichnet, dass** die Halteklammern (8) des Trommelmotors auch als eine Verbindungsfläche/als Verbindungsflächen von Zubehör der Unterdruckriemen-Transporteinrichtung (zum Beispiel Abstreifbleche, Drehtrenneinrichtungen und Zerteilgeräte) verwendet werden kann.

9. Maschinenkonstruktion nach Anspruch 7, **dadurch gekennzeichnet, dass** der Abstand (D) zwischen den die Riemenscheibe (4) lagernden Lagern (3) größer ist als die Länge (L) des Mantels (4a) der Riemenscheibe.

10. Maschinenkonstruktion nach Anspruch 9, in welcher jeder Flansch (7), der ein Ende des Mantels (4a, 4a') mit einem der Lager (3) verbindet, als Hülse ausgebildet ist, welche den Abstand zwischen den Längen (L) und (D) überbrückt.

11. Maschinenkonstruktion nach Anspruch 9, wobei jede Halteklammer (8) doppelt gefaltet ähnlich einem "Z" ausgebildet ist.

12. Verfahren zum Herstellen einer Maschinenkonstruktion mit einem elektrischen Asynchronmotor für einen Drehantrieb eines funktionellen Teils (4, 5) der Maschinenkonstruktion, wobei der Motor einen an einer nicht-drehbaren Welle (1) angebrachten Stator (2) und einen eine Kurzschlussanordnung (4b; 4b'; 5d) aufweisenden und drehbar mit der Welle (1) verbundenen Rotor (4, 5) umfasst, und
wobei der Rotor (4) dazu eingerichtet ist, die Maschinenkonstruktion anzutreiben,
**gekennzeichnet durch**
Anordnen des funktionellen Teils (4, 5) derart, dass es an sich den Rotor (4, 5) des Motors bildet,
wobei die Kurzschlussanordnung (4b; 4b'; 5d) direkt in einem einstückigen Walzenmantel des funktionellen Teils (4, 5) eingerichtet oder integriert ist, so dass sie einen integralen Bestandteil der Wand des Walzenmantels bildet.

13. Verfahren nach Anspruch 12 mit einem Asynchronmotor, wobei die Kurzschlussanordnung in Verbindung mit dem Rotor (4) derart realisiert ist, dass sie Kurzschlussstäbe (4b, 4b') und -Ringe (18) aufweist, die an dem Mantel (4a) des Rotors gehalten sind, **dadurch gekennzeichnet, dass** die Kurzschlussanordnung zumindest teilweise im Inneren des Mantels (4a, 4a') des Rotors (4) des arbeitenden funktionellen Teils der Maschinenkonstruktion (Stellglied), wie etwa der Antriebswalze (5a, 5b, 5c) einer Transporteinrichtung, arbeitet.

14. Verfahren nach Anspruch 12 oder Anspruch 13, wobei ein Asynchronmotor durch eine Fluidströmung gekühlt wird, **dadurch gekennzeichnet, dass** die Kühlung des Asynchronmotors geschlossenen realisiert ist, indem ein Kühlfluid, wie etwa Kühlluft (x) unter Überdruck, hermetisch im Wesentlichen in axialer Richtung transportiert wird, wobei die Primärströmungsanordnung (1a) des Systems durch die Statorwelle (1), wie etwa eine hohle Welle oder ein Rohr, verläuft oder/und durch mit einer Sekundärströmungsanordnung (4c) ausgestattete Kurzschlussleiter (4b'), wie etwa hohle Stäbe oder Rohre, verläuft.

15. Verfahren nach einem der Ansprüche 12 bis 14, **dadurch gekennzeichnet, dass** der Rotor (4) des festen Asynchronmotors aus einer elektrisch leitfähigen Verbundmetallstruktur hergestellt ist, wobei Kupferkurzschlussleiter (4b, 4b') am meisten geeignet sind, welche in den Löchern und/oder den Nuten angebracht sind, und zwar durch Schweißen, wie etwa Explosionsschweißen oder Stumpfschweißen in dem Stahlrotormantel (4a, 4a'), oder dass sie integral mit dem Rotor durch ein geeignetes Gießverfahren, wie etwa ein Zentrifugalgießverfahren, gegossen sind.

16. Verfahren nach einem der Ansprüche 12 bis 15, **dadurch gekennzeichnet, dass** der Rotor als Mantel einer Riemenscheibe (4) ausgebildet ist, die Teil einer Unterdruck-Riementransporteinrichtung (5) ist, welche einen stationären Unterdruckkasten (11) umfasst, wobei der Rotorantrieb ferner umfasst: die zentrale Welle (1), welche durch wenigstens eine Halteklammer (8) gehalten ist, welche mit dem Unterdruckkasten (11) verbunden ist.

## Revendications

1. Construction de machine comprenant une pièce fonctionnelle (4, 5) et un moteur électrique asynchrone pour l'entraînement de façon rotative de ladite pièce fonctionnelle (4, 5),
dans lequel ledit moteur comprend un stator (2) monté sur un arbre non rotatif (1) et un rotor (4, 5) ayant un agencement de court-circuit (4b ; 4b' ; 5d) et étant connecté de façon rotative audit arbre (1), et
dans lequel ledit rotor (4) est conçu pour entraîner ladite construction de machine,
**caractérisé en ce que**
la pièce fonctionnelle de la construction de machine comprend un cylindre monobloc, dans laquelle ledit agencement de court-circuit (4b ; 4b' ; 5d) est établi ou intégré dans le cylindre pour former une partie intégrante de la paroi du cylindre, de telle sorte que la pièce fonctionnelle (4, 5) elle-même constitue le rotor (4, 5) du moteur.

2. Construction de machine selon la revendication 1, dans laquelle l'agencement de court-circuit est établi par les barres de court-circuit (4b, 4b') et les anneaux (18) supportés sur l'enveloppe du rotor (4a, 4a'), **caractérisée en ce que** les barres de court-circuit (4b, 4b') et les anneaux (18) appartenant à l'agencement de court-circuit sont disposés intégralement avec l'enveloppe (4a, 4a') du rotor (4), qui est une pièce fonctionnelle de la construction de machine (actionneur), telle que le rouleau d'entraînement du transporteur (5).

3. Construction de machine selon la revendication 1 ou 2, dans laquelle un moteur asynchrone est agencé pour être refroidi en comprenant un flux de fluide, **caractérisée en ce que** le refroidissement du moteur asynchrone est réalisé dans un système fermé, en transportant le fluide de refroidissement, tel que l'air de refroidissement est surpressé (x) hermétiquement essentiellement dans la direction axiale avec son agencement d'écoulement principal (1a) à travers l'arbre du stator (1) tel que l'arbre creux ou tuyau et/ou avec l'agencement d'écoulement secondaire (4c) à travers les conducteurs de court-circuit (4b) tels que des barres creuses ou des tuyaux.

4. Construction de machine selon l'une quelconque des revendications 1 à 3, **caractérisée en ce que** le rotor (4) du moteur asynchrone solide comprend une structure métallique de composition conductrice d'électricité, comprenant de préférence des conducteurs de court-circuit en cuivre (4b, 4b'), soudés par soudage par explosion, soudage par résistance bout à bout dans les trous dans l'enveloppe du rotor en acier (4a, 4a') ou coulées intégralement avec l'enveloppe du rotor dans leurs places par un procédé de coulage approprié (par exemple procédé de coulage par centrifugation).

5. Construction de machine selon l'une quelconque des revendications 1 à 4, **caractérisée en ce que** lors de l'utilisation de couplage denté en particulier pour les enroulements, la sortie du moteur asynchrone équipé d'enroulements de stator à trois, quatre ou six pôles est de 0,5 à 500 kW ayant une vitesse de rotation de 0 à 20000 tours par minute.

6. Construction de machine selon l'une quelconque des revendications 1 à 5, **caractérisée en ce que** le moteur asynchrone comprend un entraînement de transformateur de fréquence, équipé d'un contrôle de vitesse de rotation actif.

7. Construction de machine selon l'une quelconque des revendications 1 à 6, **caractérisée en ce que** le rotor est formé comme une enveloppe d'une poulie (4) faisant partie d'un transporteur à bande à vide (5) comprenant une boîte à vide stationnaire (11), l'entraînement de rotor comprenant également : ledit arbre central (1) supporté par au moins un support (8) connecté à la boîte à vide (11).

8. Construction de machine selon l'une quelconque des revendications 1 à 7, **caractérisée en ce que** les supports du moteur à tambour (8) peuvent être utilisés également comme une surface de raccordement des accessoires du transporteur à bande à vide (par exemple des plaques à couteaux, des couteaux et des couperets rotatifs).

9. Construction de machine selon la revendication 7, **caractérisée en ce que** la distance D entre les paliers (3) supportant la poulie (4) est plus grande que la longueur L de la coque de la poulie (4a).

10. Construction de machine selon la revendication 9, dans laquelle chaque bride (7) connectant une extrémité de l'enveloppe (4a, 4a') à l'un des paliers (3) est formée comme une douille qui couvre la distance entre la longueur L et D.

11. Construction de machine selon la revendication 9, dans laquelle chaque support (8) est de forme repliée similaire à un z.

12. Procédé de fabrication d'une construction de machine comprenant un moteur électrique asynchrone pour l'entraînement de façon rotative d'une pièce fonctionnelle (4, 5) de ladite construction de machine,
dans lequel ledit moteur comprend un stator (2) monté sur un arbre non rotatif (1) et un rotor (4, 5) ayant un agencement de court-circuit (4b ; 4b' ; 5d) et étant connecté de façon rotative audit arbre (1), et
dans lequel ledit rotor (4) est conçu pour entraîner ladite construction de machine,
**caractérisé par**
l'agencement de la pièce fonctionnelle (4, 5) pour constituer le rotor (4, 5) du moteur, dans lequel ledit agencement de court-circuit (4b ; 4b' ; 5d) est établi ou intégré directement dans un cylindre monobloc de la pièce fonctionnelle (4, 5) pour former une partie intégrante de la paroi du cylindre.

13. Procédé selon la revendication 12, comprenant un moteur asynchrone, dans lequel l'agencement de court-circuit est réalisé en connexion avec le rotor (4) comprenant des barres de conducteur de court-circuit (4b, 4b') et des anneaux (18) supportés sur l'enveloppe du rotor (4a), **caractérisé en ce que** l'agencement de court-circuit fonctionne au moins partiellement intérieurement comme l'enveloppe (4a, 4a') du rotor (4), de la pièce fonctionnelle de la construction de machine (actionneur), telle que le rouleau d'entraînement du transporteur (5a, 5b, 5c).

14. Procédé selon la revendication 12 ou 13, dans laquelle un moteur asynchrone est refroidi en comprenant un flux de fluide, **caractérisé en ce que** le refroidissement du moteur asynchrone est réalisé dans un système fermé, en transportant le fluide de refroidissement, tel que l'air de refroidissement est surpressé (x) hermétiquement essentiellement dans la direction axiale avec son agencement d'écoulement principal (1a) à travers l'arbre du stator (1) tel que l'arbre creux ou tuyau et/ou avec l'agencement d'écoulement secondaire (4c) à travers les conducteurs de court-circuit (4b') tels que des barres creuses ou des tuyaux.

15. Procédé selon l'une quelconque des revendications 12 à 14, **caractérisé en ce que** le rotor (4) du moteur asynchrone solide comprend une structure métallique de composition conductrice d'électricité, comprenant de préférence des conducteurs de court-circuit en cuivre (4b, 4b'), raccordés dans les trous et/ou les rainures par soudage, comme le soudage par explosion, le soudage par résistance bout à bout dans l'enveloppe du rotor en acier (4a, 4a') ou coulés intégralement avec l'enveloppe du rotor dans leurs places par un procédé de coulage approprié, tel que le procédé de coulage par centrifugation.

16. Procédé selon l'une quelconque des revendications 12 à 15, **caractérisé en ce que** le rotor est formé comme une enveloppe d'une poulie (4) faisant partie d'un transporteur à bande à vide (5) comprenant une boîte à vide stationnaire (11), l'entraînement de rotor comprenant également : ledit arbre central (1) supporté par au moins un support (8) connecté à la boîte à vide (11).
